# EUROPEAN PATENT SPECIFICATION

(11) **EP 0 844 076 B1**
(45) Date of publication and mention of the grant of the patent: **09.08.2006**
(21) Application number: 97306972.7
(22) Date of filing: 09.09.1997
(51) Int. Cl.: B32B 27/08, B32B 37/04, B29D 23/00, B29C 63/36, F16L 55/163

(54) **Pipe liner bag and manufacturing method therefor**
Rohrauskleidung und Herstellungsverfahren dafür
Revêtement pour tuyaux et sa méthode de fabrication

(30) Priority: 21.11.1996 JP 31059796
(43) Date of publication of application: 27.05.1998
(73) Proprietor: SHONAN GOSEI - JUSHI SEISAKUSHO K.K., Hiratsuka-shi, Kanagawa-ken (JP); YOKOSHIMA & COMPANY, Yuki-gun, Ibaraki-ken (JP); Get Inc., Tsukuba-shi, Ibaraki-ken (JP); Oar Company, Tokorozawa-shi, Saitama-ken (JP)
(72) Inventor: Kamiyama, Takao, Hiratsuka-shi, Kanagawa-ken (JP); Yokoshima, Yasuhiro, Yuki-gun, Ibaraki-ken (JP); Endoh, Shigeru, Niihari-gun, Ibaraki-ken (JP); Aoki, Hiroyuki, Tokorozawa-shi, Saitama-ken (JP)
(74) Representative: Whalley, Kevin

(56) References cited:
- EP-A- 0 189 145
- EP-A- 0 209 396
- EP-A- 0 267 742
- EP-A- 0 342 897
- US-A- 5 242 517

## Description

The present invention relates generally to a pipe liner bag, and more particularly, to a pipe liner bag mainly for use in repair of pipelines. The present invention is also directed to a method of manufacturing the pipe liner bag.

When an underground pipe, such as pipelines and passageways, becomes defective or too old to perform properly, the pipe is repaired and rehabilitated without digging the earth to expose the pipe and disassembling the sections of the pipe. This non-digging method of repairing an underground pipe has been known and practiced commonly in the field of civil engineering. The pipe lining method utilizes a tubular pipe liner bag made of a resin-absorbent material impregnated with a hardenable resin, and having the outer surface covered with a highly air-tight plastic film. The tubular pipe liner bag is inserted into a pipe to be repaired by means of a pressurized fluid such that the pipe liner bag is turned inside out as it proceeds deeper in the pipe. Hereinafter, this manner of insertion shall be called "everting". When the entire length of the tubular liner bag is everted (i.e., turned inside out) into the pipe, the everted tubular liner is pressed against the inner wall of the pipe by a pressurized fluid, and the tubular flexible liner is hardened as the hardenable resin impregnated in the liner is heated, which is effected by heating the fluid filling the tubular liner bag. It is thus possible to line the inner wall of the defective or old pipe with a rigid liner without digging the ground and disassembling the pipe sections.

The pipe lining material for use in the foregoing pipe lining method may be manufactured by a method proposed, for example, in Japanese Laid-open Patent Application No. 4-59227 (1992). Specifically, this method involves covering the outer surface of a tubular resin-absorbent material made of unwoven fabric with a plastic film, evacuating the resin-absorbent material to closely contact the plastic film on the outer surface of resin-absorbent material, and heating the plastic film in this state to weld the plastic film on the outer surface of the resin-absorbent material.

Those skilled in the art will understand that it is necessary to strongly weld the plastic film on the resin-absorbent material in order to prevent burst of a pipe liner bag during a pipe lining work as well as in order to prevent the plastic film from peeling off the pipe liner bag after the pipe lining work. Particularly, the plastic film of the pipe liner bag must have a sufficient bonding strength to the resin-absorbent material such that it does not peel off even if it is subjected to highly pressurized jet water which may be used during a cleaning work carried out as a maintenance operation of pipelines after the lining work.

However, since the conventional method of manufacturing a pipe liner bag merely presses a plastic film softened by heat onto threads of a resin-absorbent material made of unwoven fabric, the bonding strength of the plastic film to the resin-absorbent material is not sufficiently high to meet the requirements mentioned above.

To cope with the problem associated with the bonding strength, methods have been devised for increasing a vacuum applied to the resin-absorbent material and for enhancing the softening degree of the plastic film used for the pipe liner bag in order to provide a sufficient bonding strength.

However, since unwoven fabric constituting the resin-absorbent material has irregularly distributed pinhole-like permeable pores on the surface thereof, an extremely high vacuum applied to the resin-absorbent material would cause the plastic film to intrude excessively into larger pores of the resin-absorbent material, resulting in pinholes formed through the plastic film.

Also, the welding of the plastic film involves heating the plastic film from the outside. If the interior of the plastic film is heated to about a melting point thereof for increasing the softening degree of the plastic film, the additional heat will cause pinholes in the plastic film, the surface of which has already been melted.

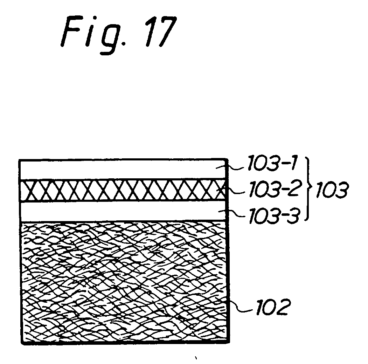

To solve the above-mentioned problems inherent in the prior art approaches, there has been proposed a method of welding a multi-layer composite film 103 having a three-layer structure consisting of a low melting point film layer (or a bonding layer) 103-1, a high melting point film layer 103-2, and a low melting point film layer (or a bonding layer) 103-3 on the outer surface of a resin-absorbent material 102, as illustrated in Fig. 17. According to this method, the low melting point film layer (or the bonding film layer) 103-1 is melted to weld the multi-layer composite film 103 on the resin-absorbent material 102 with a sufficient bonding strength.

However, when the high melting point film layer 103-2 and the low melting point film layers 103-1, 103-3 are made of different kinds of films, a low laminate strength between the high melting point film layer 103-2 and the low melting point film layers 103-1, 103-3 causes the low melting point film layers 103-1, 103-3 to partially peel off the high melting point film layer 103-2 due to the forced heating applied thereto by hot water or the like which may be used during a lining work and due to heat generated when the hardenable resin is hardened.

In addition, when the bonding films 103-1, 103-3 are bonded on opposing sides of the high melting point film 103-3 to form the multi-layer composite film 103, a high bonding strength can be achieved between the high melting point film 103-2 and the bonding films 103-1, 103-2 to prevent the problem of peeling of the bonding films 103-1, 103-3 off the high melting point film 103-2. However, the above-mentioned multi-layer composite film 103 implies the following problems.

First, since the bonding films 103-1, 103-2 are intended primarily to provide a high bonding strength, other functions thereof are rather inferior. Particularly, a large dynamic friction coefficient thereof causes difficulties in eversion of a pipe liner bag including such bonding films, performed when a pipe is lined with the pipe liner bag. In addition, the large dynamic friction coefficient acts as large insertion resistance when a tubular resin-absorbent material is inserted into a tubular plastic film during a manufacturing step of the pipe liner bag, causing the plastic film to tear.

Second, while the bonding films 103-1, 103-2 are strongly welded also to the resin-absorbent material 102, the bonding strength of the bonding films themselves is rather low. Most of such bonding films are made of materials having a large water absorption, so that they are susceptible to thermal attack of hot water or steel which may be used during the lining work.

Third, although most of high melting point films act well as a gas barrier, they are inferior in steam impermeability, so that steam, when used as a hardening heat transfer medium for a hardenable material, would intrude through the bonding films 103-1, 103-2 into the resin-absorbent material 102 which is prevented from being cured by the steam.

To solve the above-mentioned problems, the film 103 may be fabricated in a larger thickness to improve the welding strength and the fluid impermeability thereof as well as to prevent pinholes from being formed therethrough. However, a thicker film 103 would require a larger amount of the expensive bonding films 103-1, 1-3-3, thus resulting in an increased cost of the pipe liner bag 101.

The present invention has been made in view of the problems mentioned above, and it is an object of the invention to provide a pipe liner bag which meets all characteristics required thereto.

It is another object of the present invention to provide a method of manufacturing a pipe liner bag as mentioned above.

To achieve the above objects, according to a first aspect of the present invention there is provided a liner bag comprising a tubular resin-absorbent material impregnated with a hardenable resin; and a plastic film covering the outer surface of said tubular resin-absorbent material, said plastic film being formed of a tubular multi-layer composite film having a five-layer structure characterized in that said plastic film comprises a surface film layer made of low melting point polyethylene or polypropylene, or copolymer thereof having a thickness ranging from 10µm to 100µm; two thermally reactive bonding film layers made of intermediate melting point or low melting point modified polyolefin which is a bonding resin derived by introducing an organoleptic radical into polyolefin, EAA, or ionomer having a thickness ranging from 5µm to 30µm; an intermediate film layer made of high melting point nylon, EVOH, or polyester having a thickness ranging from 5µm to 50µm; and a meltable coupling film layer made of low melting point polyethylene or polypropylene, or copolymer thereof having a thickness ranging from 10µm to 100µm.

Also preferably, the multi-layer composite film is molded into a seamless tubular shape by a co-extrusion inflation method.

Further preferably, the surface film layer and the meltable coupling film layer are made of the same material, and the thermally reactive bonding film layers are made of the same material such that the multi-layer composite film is formed of three kinds of materials.

According to a second aspect of the present invention, there is provided a method of manufacturing a pipe liner bag comprising the steps of providing a tubular multi-layer composite film having a five-layer structure comprising a surface film layer made of low melting point polyethylene or polypropylene, or copolymer thereof, having a thickness ranging from 10µm to 100µm; a thermally reactive bonding film layer made of intermediate melting point or low melting point modified polyolefin which is a bonding resin derived by introducing an organoleptic radical into polyolefin, EAA, or ionomer having a thickness ranging from 5µm to 30µm; an intermediate film layer made of high melting point nylon, EVOH, or polyester having a thickness ranging from 5µm to 50µm; a thermally reactive bonding film layer made of intermediate melting point or low melting point modified polyolefin which is a bonding resin derived by introducing an organoleptic radical into polyolefin, EAA, or ionomer having a thickness ranging from 5µm to 30µm; and a meltable coupling film layer made of low melting point polyethylene or polypropylene, or copolymer thereof, having a thickness ranging from 10µm to 100µm; inserting a tubular resin-absorbent material into said tubular multi-layer composite film; evacuating said resin-absorbent material such that said multi-layer composite film comes into close contact with the outer surface of said resin-absorbent material; heating said multi-layer composite film while maintaining said closely contacted state to weld said multi-layer composite film onto said resin-absorbent material; and impregnating a hardenable resin in said resin-absorbent material.

Preferably, the method of manufacturing a pipe liner bag further comprises the steps of inserting a highly air-tight pressure tube into the resin-absorbent material, inflating the pressurizing tube with a fluid pressure to extend the resin-absorbent material and the multi-layer composite film outwardly in a circular tube shape, and evacuating the resin-absorbent material to bring the multi-layer composite film into close contact with the outer surface of the resin-absorbent material.

Also preferably, the step of heating the multi-layer composite film includes the step of moving a heating apparatus relative to the multi-layer composite film to gradually weld the multi-layer composite film onto the resin-absorbent material from one end to the other end in the lengthwise direction thereof.

Further preferably, the multi-layer composite film is molded into a seamless tubular shape by a co-extrusion inflation method.

Further preferably, the surface film layer and the meltable coupling film layer are made of the same material, and the thermally reactive bonding film layers are made of the same material such that the multi-layer composite film is formed of three kinds of materials.

According to the present invention, the multi-layer composite film has an integral five-layer structure including the surface film layer and the meltable coupling film layer bonded on the opposing surfaces of the intermediate film layer through the thermally reactive bonding film layers such that required characteristics are allotted to the respective layers, thereby making it possible to provide a pipe liner bag which meets all the required characteristics.

The above and other objects, features, and advantages of the present invention will become apparent from the following detailed description of the preferred embodiments thereof when read in conjunction with the accompanying drawings.
Fig. 1 is a partial perspective view of a pipe liner bag according to an embodiment of the present invention;
Figs. 2 is an enlarged partial cross-sectional view illustrating the structure of the pipe liner bag of Fig. 1;
Figs. 3 - 6 are perspective views for explaining a method of manufacturing a pipe liner bag according to an embodiment of the present invention;
Figs. 7 is a cross-sectional view illustrating in detail the structure of a multi-layer composite film, a resin-absorbent material, and a pressurizing tube in the state shown in Fig. 3;
Fig. 8 is a cross-sectional view illustrating how the resin-absorbent material is evacuated;
Figs. 9 - 14 are diagrams for explaining a method of manufacturing a pipe liner bag according to another embodiment of the present invention;
Fig. 15 is a cross-sectional view illustrating a pipe lining method performed using the pipe liner bag according to the present invention;
Fig. 16 is an enlarged view illustrating in detail a portion A in Fig. 15; and
Fig. 17 is a partial cross-sectional view illustrating the structure of a prior art pipe liner bag.

The present invention will hereinafter be described in connection with several preferred embodiments thereof with reference to the accompanying drawings.

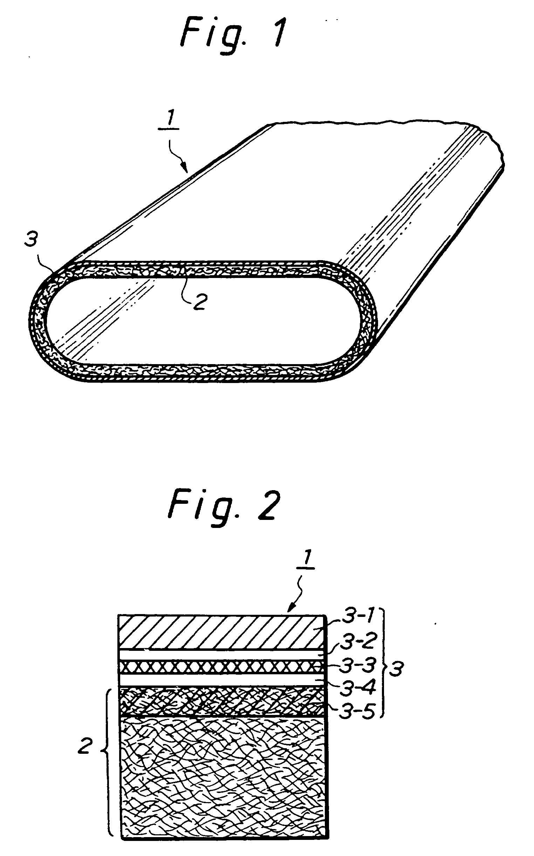

Fig. 1 is a partial perspective view illustrating a pipe liner bag according to an embodiment of the present invention, and Fig. 2 is a enlarged partial cross-sectional view illustrating the structure of the pipe liner bag.

Referring first to Fig. 1, a pipe liner bag 1 according to this embodiment comprises a tubular resin-absorbent material 2 impregnated with a thermosetting resin such as unsaturated polyester or the like, and a multi-layer composite film 3 deposited overlying the outer surface of the resin-absorbent material 2. The resin-absorbent material 2 is made of high melting point unwoven fabric comprising a simple or a mixture of polyester, acrylic, nylon, glass, carbon, ceramic, and so on. It should be noted that the resin-absorbent material 2 may be impregnated with another hardenable resin such as a light hardenable resin, a cold hardenable resin, and so on, in place of the thermosetting resin.

The multi-layer composite film 3, as illustrated in Fig. 2, has a five-layer laminate structure consisting of a surface film layer 3-1, a thermally reactive bonding film layer 3-2, an intermediated film layer 3-3, a thermally reactive bonding film layer 3-4, and a meltable coupling film layer 3-5, and is molded into a seamless tubular configuration by a co-extrusion inflation method. More specifically, the tubular multi-layer composite film 3 is formed of a five-layer laminate structure in which the surface film layer 3-1 and the weld coupling film layer 3-5 are bonded through the thermally reactive bonding film layers 3-2, 3-4 onto the inner and outer surfaces of the intermediate film layer 3-3, respectively,

During a manufacturing process of the pipe liner bag 1, later described, the innermost meltable coupling film layer 3-5 is melt into the outer surface of the resin-absorbent material 2 when the multi-layer composite film 3 is to be welded onto the outer surface of the resin-absorbent material 2 by applying heat thereto (see Fig. 2).

Generally, the surface film layer 3-1 is required to be inexpensive and have the following characteristics:
1) small dynamic friction coefficient;
2) high water resistance;
3) high steam impermeability;
4) good thermal welding property;
5) high resistance to formation of pinholes;
6) high resistance to styrene;
7) high resistance to brittleness;
and so on. For satisfying the foregoing characteristics, the surface film layer 3-1 is made of low density polyethylene (LDPE), polypropylene (PP), or their copolymers and has a thickness ranging from 10 to 100 µm.

The thermally reactive bonding film layers 3-2, 3-4 are required to have the following characteristics:
1) high bondability to different films and unwoven fabric;
2) high resistance to styrene;
3) high resistance to brittleness;
and so on. For satisfying the foregoing characteristics, the thermally reactive bonding film layers 3-2, 3-4 is made of a film comprising a middle melting point or low melting point admer (tradename), EAA, or ionomer, and has a thickness ranging from 5 to 30 µm.

Here, the admer is a bonding resin derived by introducing an organoleptic radical into polyolefin, the EAA is an ethylene acrylic acid copolymerized resin, and the ionomer is an ethylene methacrylic acid copolymerized resin. Since these resins have a high bondability to different films, the thermally reactive bonding film layers 3-2, 3-4 made of one of these materials firmly bond the surface film layer 3-1 and the meltable coupling film layer 3-5, which are made of different kinds of films, on opposing surfaces of the intermediate film layer 3-3 to form the laminate structure.

The intermediate film layer 3-3 is required to be inexpensive and have the following characteristics:
1) small dynamic friction coefficient;
2) high melting point;
3) high resistance to formation of pinholes;
4) high resistance to styrene;
5) high resistance to brittleness;
and so on. For satisfying the foregoing characteristics, the intermediate film layer 3-3 is made of high melting point nylon, ethylene vinyl alcohol (EVOH), or polyester and has a thickness ranging from 5 to 50 µm.

The meltable coupling film layer 3-5 is required to be inexpensive and have the following characteristics:
1) small dynamic friction coefficient;
2) high fluidity during a thermal welding operation;
3) high resistance to styrene;
4) stable strength;
5) high resistance to brittleness;
and so on. For satisfying the foregoing characteristics, the meltable coupling film layer 3-5 is made of low melting point polyethylene (PE), polypropylene (PP), or their copolymers, and has a thickness ranging from 10 to 100 µm.

The materials for the respective films constituting the foregoing surface film layer 3-1, the thermally reactive bonding film layer 3-2, the intermediated film layer 3-3, the thermally reactive bonding film layer 3-4, and the meltable coupling film layer 3-5 may be combined to provide six different multi-layered composite films (1) - (6), for example, as listed in the following table 1.

**Table 1**

| Constituent Layer | Multi-Layer Composite Film (1) | Multi-Layer Composite Film (2) | Multi-Layer Composite Film (3) | Multi-Layer Composite Film (4) | Multi-Layer Composite Film (5) | Multi-Layer Composite Film (6) | Thickness (µm) |
|---|---|---|---|---|---|---|---|
| Surface Film Layer | LDPE | LDPE | HDPE | LDPE | PP | LDPE | 10-100 |
| Bonding Film Layer | AD | AD | AD | Ionomer | AD | EAA | 5~30 |
| Intermediate Film Layer | nylon | EVOH | nylon | nylon | EVOH | nylon | 5-50 |
| Bonding Film Layer | AD | AD | AD | Ionomer | AD | EAA | 5-30 |
| Meltable Coupling Film Layer | LDPE | LDPE | HDPE | LDPE | PP | LDPE | 10-100 |

| | | | | | | | |
|---|---|---|---|---|---|---|---|
| Note: LDPE: low density polyethylene; | | | | | | | |
| HDPE: high density polyethylene; | | | | | | | |
| AD : admer; | | | | | | | |
| EVOH: ethylene vinyl alcohol; and | | | | | | | |
| PP : polypropylene. | | | | | | | |

It should be noted that all the multi-layer composite films (1) - (5) except for the multi-layer composite film (6) employ the same materials for the surface film layer 3-1 and the meltable coupling film layer 3-5 and for the thermally reactive bonding film layers 3-2, 3-4 so as to limit the materials constituting the respective multi-layer composite films (1) - (5) to three, so that a manufacturing cost thereof can be reduced.

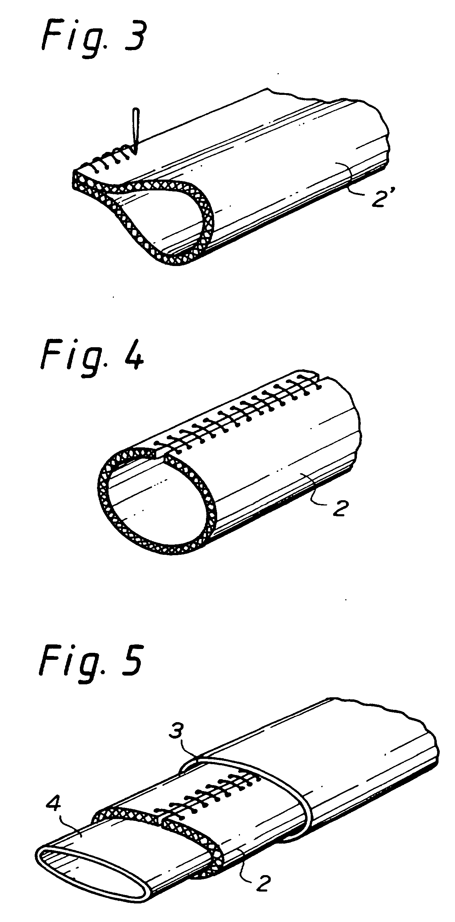

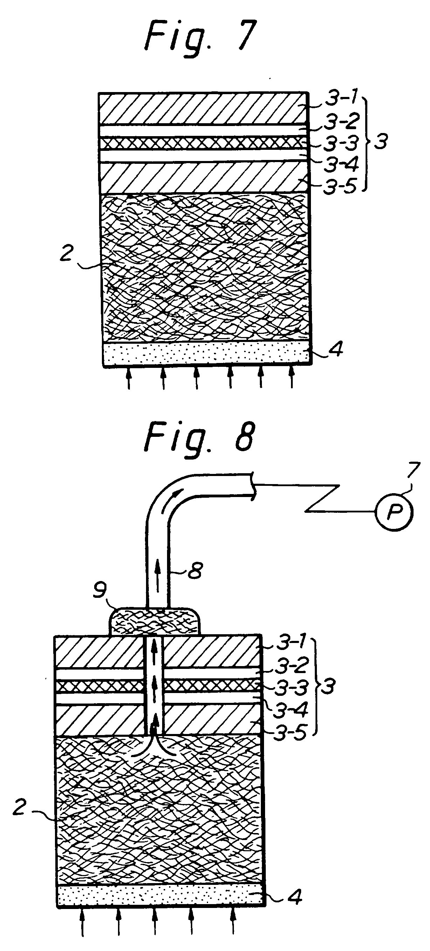

Next, a method of manufacturing the pipe liner material 1 having the foregoing structure will be described with reference to Figs. 3 - 8. Figs. 3 - 6 are perspective views for explaining the manufacturing method according to the present invention in the order of steps; Fig. 7 is a cross-sectional view illustrating the detailed structure of the multi-layer composite film layer 3, the resin-absorbent material 2, and a pressure tube 4 in a state shown in Fig. 3; and Fig. 8 is a cross-sectional view illustrating how the resin-absorbent material 2 is evacuated.

In the manufacturing method according to an embodiment of the present invention, first, both edges in the width direction of a resin-absorbent material 2' cut into a strip shape are overlapped, and the overlapping edge portions are sewed together (lock sewing) into a tubular shape. After the sewing operation is completed, the seam is stretched in the circumferential direction to form a tubular resin-absorbent material 2 which has both the edges in the width direction abutted to each other, as illustrated in Fig. 4.

Other than the lock sewing, the tubular resin-absorbent material 2 may be made by joining the abutted edges of the strip resin-absorbent material 2' by straight sewing, punching using needles, welding, bonding using a bonding agent, or the like.

Next, as illustrated in Fig. 5, the tubular resin-absorbent material 2 is inserted into the aforementioned tubular multi-layer composite film 3, and the highly air-tight pressure tube 4 is also inserted into the resin-absorbent material 2. The structure of the multi-layer composite film 3, the resin-absorbent material 2, and the pressure tube 4 in this state is illustrated in detail in Fig. 7.

It should be noted that the innermost layer of the multi-layer composite film 3, i.e., the meltable coupling film layer 3-5 formed of a small dynamic friction coefficient film prevents large friction resistance from occurring between the resin-absorbent material 2 and the multi-layer composite film 3, when the resin-absorbent material 2 is inserted into the multi-layer composite film 3. Thus, the resin-absorbent material 2 can be smoothly inserted into the multi-layer composite film 3 without resistance.

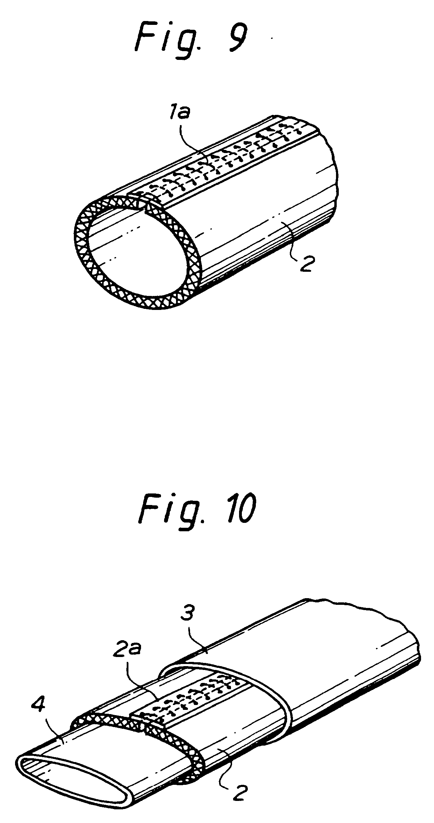

As an additional step for forming the tubular resin-absorbent material 2, a thin unwoven fabric strip 2a may be bonded on the outer periphery of the resin-absorbent material 2 overlying the seam thereof by a thermal bonding agent to cover the seam, as illustrated in Figs. 9 and 10. This is convenient because the seam will not appear on the surface (the inner wall) of the pipe liner bag 1 after the pipe liner bag 1 is everted and cured. As the thermal bonding agent, bonding agents of a polyethylene or a nylon group may be used.

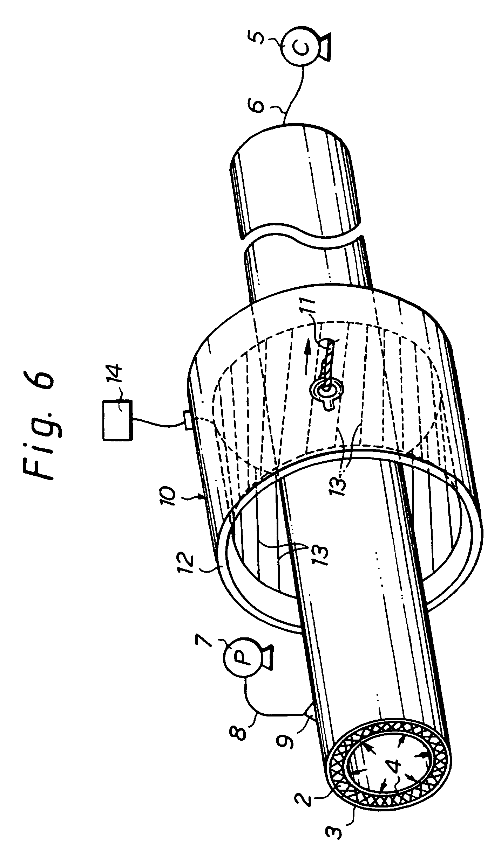

Next, in the state illustrated in Fig. 5, both ends of the pressure tube 4 are closed to hermetically seal the pressure tube 4. Then, as illustrated in Fig. 6, when compressed air is supplied into the pressure tube 4 from a compressor 5 through an air hose 6, the pressure tube 4 is inflated by the pressure applied by the compressed air to extend the resin-absorbent material 2 and the multi-layer composite film 3 outwardly in a circular tube shape.

Next, with the above-mentioned state maintained unchanged, the resin-absorbent material 2 is evacuated using a vacuum pump 7 and a vacuum hose 8, as illustrated in Figs. 6 and 8, such that the multi-layer composite film 3 located outside the resin-absorbent material 2 is attracted by negative pressure generated within the resin-absorbent material 2 to come into close contact with the outer surface of the resin-absorbent material 2. In this event, since the surface film layer 3-1 constituting the outermost layer of the multi-layer composite film 3 has high resistance to the formation of pinholes, even if the resin-absorbent material 2 is evacuated as mentioned above, the surface film layer 3-1 is less susceptible to pinholes. Reference numeral 9 in Fig. 8 designates a vacuum pad.

Subsequently, the resin-absorbent material 2 together with the multi-layer composite film 3 and the pressure tube 4 is passed through a cylindrical heating apparatus 10, as illustrated in Fig. 6. The tubular assembly 2, 3, 4 is pulled by a pull rope 11, while the heating apparatus 10 is being driven, to move the tubular assembly over the entire length thereof through the heating apparatus 10 in the direction indicated by the arrow. Consequently, the multi-layer composite film 3 is heated by the heating apparatus 10 and gradually welded on the outer peripheral surface of the resin-absorbent material 2, whereby the outer peripheral surface of the resin-absorbent material 2 is covered with the multi-layer composite film 3. The heating apparatus 10 may comprise a plurality of linear electric heaters 13 obliquely mounted on the inner wall surface of a cylinder 12 having a diameter sufficiently larger than that of the resin-absorbent material 2. When the electric heaters 13 are powered from a power supply 14, the electric heaters 13 generate heat which is applied to the multi-layer composite film 3 for heating.

It should be particularly pointed out herein that since the multi-layer composite film 3 has the intermediate film layer 3-3 made of a high melting point film and positioned in the middle thereof, as mentioned above, the intermediate film layer 3-3 is never melted by heating, so that sufficient heat is transferred from the heating apparatus 10 to the meltable coupling film layer 3-5 through the intermediate film layer 3-3 and the thermally reactive bonding film layer 3-4 located inside the layer 3-3. In addition, since the meltable coupling film layer 3-5 is formed of a low melting point film exhibiting a high fluidity during a thermal welding operation, it can be melt into the unwoven fabric on the outer surface of the resin-absorbent material 2 in a melt state (see Fig. 2) so as to firmly bond the multi-layer composite film 3 on the outer surface of the resin-absorbent material 2. Further, since the film constituting the meltable coupling film layer 3-5 is inexpensive, a thicker meltable coupling film layer 3-5, for more strongly welding the multi-layer composite film 3 on the outer surface of the resin-absorbent material 2, would not introduce a significant increase in cost.

Subsequently, the resin-absorbent material 2 having the outer surface thereof covered with the multi-layer composite film 3 is impregnated with an uncured thermosetting resin such as unsaturated polyester or the like, and finally, the pipe liner bag 1, illustrated in Fig. 1, is completed.

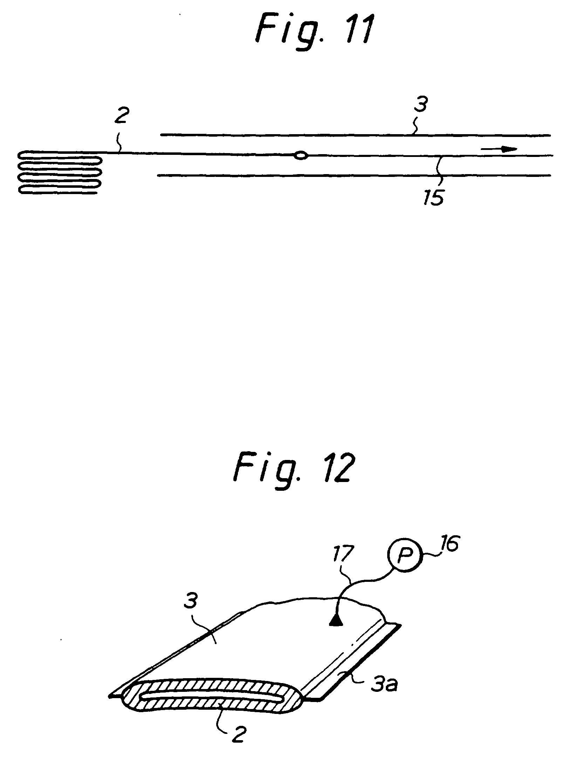

Next, a method of manufacturing the pipe liner bag 1 according to another embodiment of the present invention will be described below with reference to Figs. 11 - 14 which are diagrams for explaining the manufacturing method in the order of steps.

In this embodiment, after manufacturing a tubular resin-absorbent material 2 through similar steps (see Figs. 3 and 4) to the previous embodiment, one end of the resin-absorbent material 2 is tied to a pull rope 15 as illustrated in Fig. 11. Then, the pull rope 15 is passed through a multi-layer composite film 3 having a diameter slightly larger than that of the resin-absorbent material 2 and pulled in the direction indicated by the arrow to introduce the resin-absorbent material 2 into the multi-layer composite film 3. The multi-layer composite film 3 has a five-layer structure similar to the aforementioned one.

Next, the resin-absorbent material 2 is tied to a vacuum hose 17 connected to a vacuum pump 16 which is driven to evacuate the resin-absorbent material 2, as illustrated in Fig. 12. Consequently, the multi-layer composite film 3 is attracted by negative pressure generated within the resin-absorbent material 2 and comes into close contact with the outer surface of the resin-absorbent material 2, as illustrated. As mentioned above, since the multi-layer composite film 3 has a diameter larger than that of the resin-absorbent material 2, fins 3a are formed on opposing ends of the multi-layer composite film 3 in the width direction of the resin-absorbent material 2, as illustrated in Fig. 12.

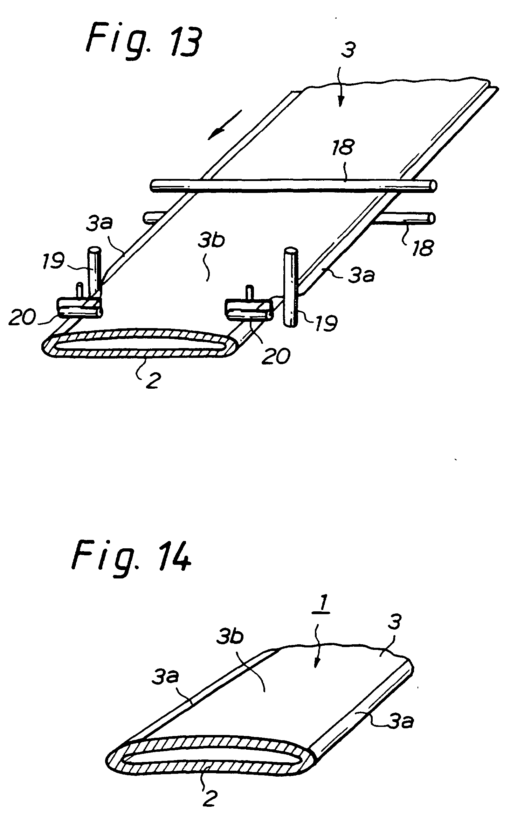

Then, with the above-mentioned state maintained unchanged, the resin-absorbent material 2 and the multi-layer composite film 3 in a closely contact state are moved between upper and lower heaters 18 in the direction indicated by the arrow in Fig. 13 to gradually heat the multi-layer composite film 3 by the heaters 18 over the entire length thereof. As a result, the multi-layer composite film 3 is sequentially welded on the outer surface of the resin-absorbent material 2, so that the multi-layer composite film 3 and the resin-absorbent material 2 are laminated. In this step, the fins 3a on the multi-layer composite film 3, immediately after passed through the heaters 18, are bent upwardly by guide rollers 19 and pressed onto a main body film portion 3b (a portion of the multi-layer composite film 3 except for the fins 3a which is to be brought into close contact with the resin-absorbent material 2) by rollers 20. Since the pressed fins 3a are still heated in a melt state, they are welded into the main body film portion 3b.

Subsequently, the resin-absorbent material 2 having the outer surface thereof covered with the multi-layer composite film 3 is impregnated with an uncured thermosetting resin such as unsaturated polyester or the like, and finally, the pipe liner bag 1, illustrated in Fig. 14, is completed.

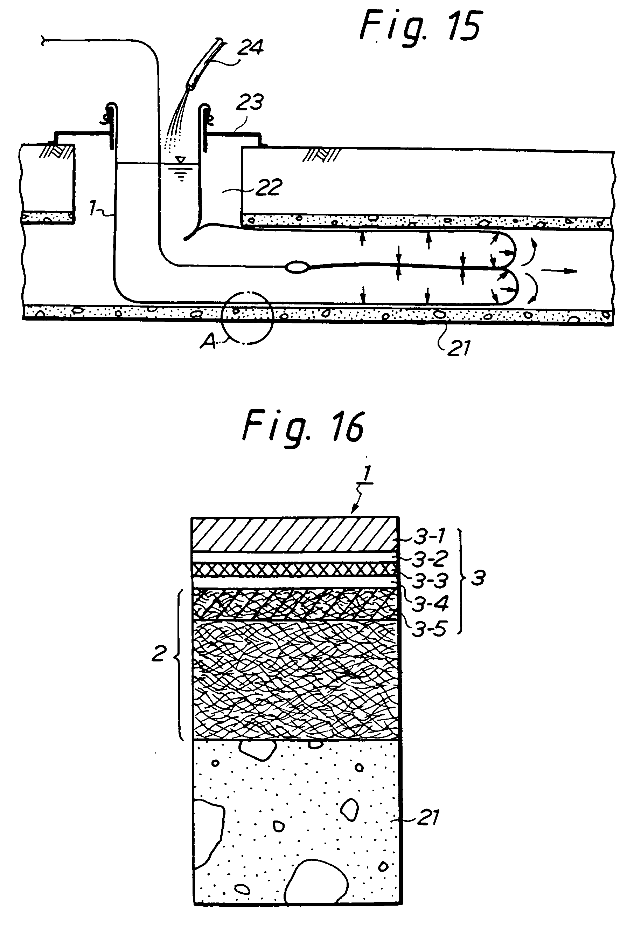

Next, a pipe lining method performed using the pipe liner bag 1 manufactured in the manner discussed above will be described with reference to Figs. 15 and 16. Fig. 15 is a cross-sectional view illustrating the pipe lining method, and Fig. 16 is an enlarged view illustrating in detail a portion A in Fig. 15.

Referring first to Fig. 15, reference numeral 21 designates a pipeline such as a sewage pipe buried underground, and 22 a man hole open to the ground. An eversion nozzle 23 is installed near the periphery of the man hole 22 on the ground.

When the pipeline 21 is repaired, one end of the pipe liner bag 1 is folded back and anchored about the outside of the top rim of the eversion nozzle 23. Then, water is poured into the folded pipe liner bag 1 from a water charge hose 24. The water pressure forces the pipe liner bag 1 to roll inside out in the pipeline 21 and to proceed forward. When the pipe liner bag 1 is everted, the multi-layer composite film 3 covering the outer surface of the resin-absorbent material 2 of the pipe liner bag 1 before the eversion is located inside the resin-absorbent material 2 as illustrated in Fig. 16.

Now, the multi-layer composite film 3 has the surface film layer 3-1 as the innermost layer, and the thermally reactive bonding film layer 3-2, the intermediate film layer 3-3, the thermally reactive film layer 3-4, and the meltable coupling film layer 3-5 located outside the surface film layer 3-1 in this order. It should be noted that the meltable coupling film layer 3-5 has been melt into the unwoven fabric of the resin-absorbent material 2 and integrated with the resin-absorbent material 2, as previously described.

Since the surface film layer 3-1 is formed of a film having a small dynamic friction coefficient, the eversion of the pipe liner bag 1 can be smoothly advanced.

When the entire length of the pipe liner bag 1 has been everted into the pipeline 21, the water filling the pipe liner bag 1 is replaced with hot water or the water is heated by steam to heat the pipe liner bag 1 which remains pressed against the inner wall of the pipeline 21 by the water pressure. This heating results in curing the thermosetting resin impregnated in the resin-absorbent material 2 of the pipe liner bag 1 to line the inner wall of the pipeline 21 with the cured pipe liner bag 1. In this way, the pipeline 21 is repaired and rehabilitated.

During the curing of the pipe liner bag 1, the external heat applied from a heat medium such as hot water, steam, or the like to the unsaturated polyester resin constituting the thermosetting resin impregnated in the resin-absorbent material 2 as well as heat generated by the curing of the unsaturated polyester resin itself may cause styrene gas to be generated from the unsaturated polyester resin. Even if the styrene gas is generated, the films having high resistance to styrene are used to form all of the surface film layer 3-1, the thermally reactive bonding film layer 3-2, the intermediate film layer 3-3, the thermally reactive bonding film layer 3-2, and the meltable coupling film layer 3-5 of the multi-layer composite film 3, so that the multi-layer composite firm 3 is prevented from swelling to end up to tear.

In addition, since the film layers 3-1 - 3-5 of the multi-layer composite film 3 are all made of films having high resistance to brittleness, even if the pipe liner bag 1 is exposed to extremely low temperatures, the multi-layer composite film 3 will not be broken due to brittleness, thus ensuring high durability to the pipe liner bag 1.

Further, from the fact that the surface film layer 3-1 is made of a high steam impermeable film and the intermediate film layer 3-3 is made of a high gas impermeable film, even if compressed air, for example, is used to evert the pipe liner bag 1 and steam is used for curing the thermosetting resin, the surface film layer 3-1 blocks the steam from intruding into the resin-absorbent material 2 to allow the thermosetting resin to be stably cured, and the intermediate film layer 3-3 prevents the compressed air from leaking to ensure high air-tight sealing within the pipe liner bag 1.

Furthermore, the intermediate film layer 3-3 is made of a film having high resistance to formation of pinholes, high liquid-tight and air-tight sealing can be ensured for the pipe liner bag even if the surface film layer 3-1 is broken during a lining work or the like.

It will be appreciated that two multi-layer composite films 3 may be disposed around the outer surface of the resin-absorbent material 2 to form a film layer having a total of ten layers.

As will be apparent from the foregoing description, according to the present invention, the multi-layer composite film has an integral five-layer structure including the surface film layer and the meltable coupling film layer bonded on the opposing surfaces of the intermediate film layer through the thermally reactive bonding film layers such that required characteristics are allotted to the respective layers, thereby making it possible to provide a pipe liner bag which meets all the required characteristics.

While the present invention has been described in connection with its preferred embodiments, it is to be understood that various modifications will occur to those skilled in the art without departing from the scope of the present invention as determined solely by the appended claims.

## Claims

1. A pipe liner bag (1) comprising:
a tubular resin-absorbent material (2) impregnated with a hardenable resin; and
a plastic film covering the outer surface of said tubular resin-absorbent material, said plastic film being formed of a tubular multi-layer composite film (3) having a five-layer structure **characterized in that** said plastic film comprises a surface film layer (3-1) made of low melting point polyethylene or polypropylene, or copolymer thereof having a thickness ranging from 10µm to 100µm; two thermally reactive bonding film layers (3-2, 3-4) made of intermediate melting point or low melting point modified polyolefin which is a bonding resin derived by introducing an organoleptic radical into polyolefin, EAA, or ionomer having a thickness ranging from 5µm to 30µm; an intermediate film layer (3-3) made of high melting point nylon, EVOH, or polyester having a thickness ranging from 5µm to 50µm; and a meltable coupling film layer (3-5) made of low melting point polyethylene or polypropylene, or copolymer thereof having a thickness ranging from 10µm to 100µm.

2. A pipe liner bag as claimed in claim 1, **characterized in that** said multi-layer composite film (3) is in the form of a molded seamless tubular shape.

3. A pipe liner bag as claimed in claim 1 or claim 2, **characterized in that** said surface film layer (3-1) and said meltable coupling film layer (3-5) are made of the same material, and said thermally reactive bonding film layers (3-2,3-4) are made of the same material such that said multi-layer composite film (3) is formed of three kinds of materials.

4. A method of manufacturing a pipe liner bag (1) comprising the steps of:
providing a tubular multi-layer composite film (3) having a five-layer structure comprising a surface film layer (3-1) made of low melting point polyethylene or polypropylene, or copolymer thereof, having a thickness ranging from 10µm to 100µm; a thermally reactive bonding film layer (3-2) made of intermediate melting point or low melting point modified polyolefin which is a bonding resin derived by introducing an organoleptic radical into polyolefin, EAA, or ionomer having a thickness ranging from 5µm to 30µm; an intermediate film layer (3-3) made of high melting point nylon, EVOH, or polyester having a thickness ranging from 5µm to 50µm; a thermally reactive bonding film layer (3-4) made of intermediate melting point or low melting point modified polyolefin which is a bonding resin derived by introducing an organoleptic radical into polyolefin, EAA, or ionomer having a thickness ranging from 5µm to 30µm; and a meltable coupling film layer (3-5) made of low melting point polyethylene or polypropylene, or copolymer thereof, having a thickness ranging from 10µm to 100µm;
inserting a tubular resin-absorbent material (2) into said tubular multi-layer composite film (3);
evacuating said resin-absorbent material such that said multi-layer composite film comes into close contact with the outer surface of said resin-absorbent material;
heating said multi-layer composite film while maintaining said closely contacted state to weld said multi-layer composite film onto said resin-absorbent material; and
impregnating a hardenable resin in said resin-absorbent material.

5. A method as claimed in claim 4, **characterized by** further comprising the steps of:
inserting a highly air-tight pressure tube (4) into said resin-absorbent material (2);
inflating said pressure tube with a fluid pressure to extend said resin-absorbent material and said multi-layer composite film (3) outwardly in a circular tube shape; and
evacuating said resin-absorbent material to bring said multi-layer composite film into close contact with the outer surface of said resin-absorbent material.

6. A method as claimed in claim 4 or 5, **characterized in that** said step of heating said multi-layer composite film (3) includes the step of moving a heating apparatus (10) relative to said multi-layer composite film (3) to gradually weld said multi-layer composite film onto said resin-absorbent material (2) from one end to the other end in the lengthwise direction thereof.

7. A method as claimed in any of claims 4 to 6, **characterized in that** said multi-layer composite film (3) is molded into a seamless tubular shape by a co-extrusion inflation method.

8. A method as claimed in any of claims 4 to 7, **characterized in that** said surface film layer (3-1) and said meltable coupling film layer (3-5) are made of the same material, and said thermally reactive bonding film layers (3-2,3-4) are made of the same material such that said multi-layer composite film (3) is formed of three kinds of materials.

## Patentansprüche

1. Rohrauskleidung (1), aufweisend:
ein rohrförmiges, harzaufnehmendes Material (2) imprägniert mit einem härtbaren Harz; und
eine Kunststofffolie, die die Außenseite des rohrförmigen, harzaufnehmenden Materials bedeckt, wobei die Kunststofffolie aus einer rohrförmigen, mehrlagigen Verbundfolie (3) erzeugt ist, die einen fünflagigen Aufbau hat, **dadurch gekennzeichnet, dass** die Kunststofffolie eine Außenhautlage (3-1) aufweist, die aus einem Polyethylen oder Polypropylen mit niedrigem Schmelzpunkt oder aus einem Copolymer davon mit einer Dicke im Bereich von 10 bis 100 µm hergestellt ist; zwei thermisch reaktionsfähige Klebfilmlagen (3-2, 3-4), hergestellt aus modifiziertem Polyolefin mit mittlerem Schmelzpunkt oder niedrigem Schmelzpunkt, bei dem es sich um ein Klebharz handelt, das deriviert ist durch Einführen eines organoleptischen Restes in Polyolefin, EAA oder Ionomer mit einer Dicke im Bereich von 5 bis 30 µm; eine dazwischenliegende Folienlage (3-3), die hergestellt ist aus Nylon, EVOH oder Polyester mit hohem Schmelzpunkt mit einer Dicke im Bereich von 5 bis 50 µm; und eine schmelzfähige, haftvermittelnde Folienlage (3-5), die hergestellt ist aus Polyethylen oder Polypropylen mit niedrigem Schmelzpunkt oder einem Copolymer davon mit einer Dicke im Bereich von 10 bis 100 µm.

2. Rohrauskleidung nach Anspruch 1, **dadurch gekennzeichnet, dass** die mehrlagige Verbundfolie (3) eine formgepresste, nahtlose Rohrform hat.

3. Rohrauskleidung nach Anspruch 1 oder 2, **dadurch gekennzeichnet, dass** die Außenhautlage (3-1) und die schmelzfähige, haftvermittelnde Folienlage (3-5) aus dem gleichen Material hergestellt sind und dass die thermischen, reaktionsfähigen Klebfilmlagen (3-2, 3-4) hergestellt sind aus dem gleichen Material, sodass die mehrlagige Verbundfolie (3) aus drei Arten von Materialien erzeugt ist.

4. Verfahren zum Herstellen einer Rohrauskleidung (1) umfassend die Schritte:
Bereitstellen einer rohrförmigen, mehrlagigen Verbundfolie (3) mit einem fünflagigen Aufbau, aufweisend eine Außenhautlage (3-1), hergestellt aus Polyethylen oder Polypropylen mit niedrigem Schmelzpunkt oder einem Copolymer davon mit einer Dicke im Bereich von 10 bis 100 µm; eine thermisch reaktionsfähige Klebfilmlage (3-2), hergestellt aus modifiziertem Polyolefin mit mittlerem Schmelzpunkt oder niedrigem Schmelzpunkt, das ein Klebharz ist, deriviert durch Einführen eines organoleptischen Restes in Polyolefin, EAA oder Ionomer mit einer Dicke im Bereich von 5 bis 30 µm; eine dazwischenliegende Folienlage (3-3), hergestellt aus Nylon, EVOH oder Polyester mit hohem Schmelzpunkt mit einer Dicke im Bereich von 5 bis 50 µm; eine thermisch reaktionsfähige Klebfilmlage (3-4), hergestellt aus modifiziertem Polyolefin mit mittlerem Schmelzpunkt oder niedrigem Schmelzpunkt, das ein Klebharz ist, deriviert durch Einführen eines organoleptischen Restes in Polyolefin, EAA oder Ionomer mit einer Dicke im Bereich von 5 bis 30 µm; und eine schmelzfähige, haftvermittelnde Folienlage (3-5), hergestellt aus Polyethylen oder Polypropylen mit niedrigem Schmelzpunkt oder einem Copolymer davon mit einer Dicke im Bereich von 10 bis 100 µm;
Einsetzen eines rohrförmigen, harzaufnehmenden Materials (2) in die rohrförmige, mehrlagige Verbundfolie (3);
Evakuieren des harzaufnehmenden Materials, sodass die mehrlagige Verbundfolie in engen Kontakt mit der äußeren Oberfläche des harzaufnehmenden Materials gelangt;
Erhitzen der mehrlagigen Verbundfolie, währenddessen der Zustand mit engem Kontakt aufrechterhalten wird, um die mehrlagige Verbundfolie auf das harzaufnehmende Material aufzuschweißen; und
Imprägnieren des harzaufnehmenden Materials mit einem härtbaren Harz.

5. Verfahren nach Anspruch 4, umfassend die weiteren Schritte:
Einsetzen eines hochluftdichten Druckschlauchs (4) in das harzaufnehmende Material (2);
Aufblasen des Druckschlauchs mit einem Fluiddruck, um das harzaufnehmende Material und die mehrlagige Verbundfolie (3) nach außen zu einer kreisrunden Rohrform aufzuweiten; und
Evakuieren des harzaufnehmenden Materials, um die mehrlagige Verbundfolie in engen Kontakt mit der Außenseite des harzaufnehmenden Materials zu bringen.

6. Verfahren nach Anspruch 4 oder 5, **dadurch gekennzeichnet, dass** der Schritt des Erhitzens der mehrlagigen Verbundfolie (3) den Schritt einschließt, den Apparat zum Erhitzen (10) relativ zu der mehrlagigen Verbundfolie (3) zu bewegen, um die mehrlagige Verbundfolie nach und nach auf das harzaufnehmende Material (2) von dem einem Ende zu dem anderen Ende in Längsrichtung dazu aufzuschweißen.

7. Verfahren nach einem der Ansprüche 4 bis 6, **dadurch gekennzeichnet, dass** die mehrlagige Verbundfolie (3) durch eine Coextrusionsaufblasmethode zu einer nahtlosen Rohrform formgepresst wird.

8. Verfahren nach einem der Ansprüche 4 bis 7, **dadurch gekennzeichnet, dass** die Außenhautlage (3-1) und die schmelzfähige, haftvermittelnde Folienlage (3-5) aus dem gleichen Material hergestellt sind und dass die thermisch reaktionsfähigen Klebfilmlagen (3-2, 3-4) aus dem gleichen Material hergestellt sind, sodass die mehrlagige Verbundfolie (3) aus drei Arten von Materialien erzeugt ist.

## Revendications

1. Revêtement pour tuyaux (1) qui comprend:
un matériau résine absorbant de forme tubulaire (2) imprégné d'une résine durcissable; et
un film plastique recouvrant la surface extérieure dudit matériau résine absorbant de forme tubulaire, ledit film plastique étant formé d'un film composite multicouches tubulaire (3) à structure à cinq couches **caractérisé en ce que** ledit film plastique comprend une couche mince en surface (3-1) composée d'un polyéthylène ou polypropylène à point de fusion bas ou d'un copolymère de ces substances et dont l'épaisseur est comprise entre 10 µm et 100 µm; deux couches de liage minces thermoréactives (3-2, 3-4) composées d'une polyoléfine modifiée à point de fusion intermédiaire ou bas, qui est une résine de liage obtenue en introduisant un radical organoleptique dans une polyoléfine, l'EAA ou un ionomère et dont l'épaisseur est comprise entre 5 µm et 30 µm; une couche mince intermédiaire (3-3) composée d'un nylon, EVOH ou polyester à point de fusion élevé et d'une épaisseur comprise entre 5 µm et 50 µm; et une couche d'accouplement mince et fusible (3-5) composée d'un polyéthylène ou polypropylène à point de fusion bas ou d'un copolymère de ces substances et dont l'épaisseur est comprise entre 10 µm et 100 µm.

2. Revêtement pour tuyaux selon la revendication 1, **caractérisé en ce que** ledit film composite multicouches (3) se présente sous la forme d'une structure tubulaire moulée sans soudure.

3. Revêtement pour tuyaux selon la revendication 1 ou la revendication 2, **caractérisé en ce que** ladite couche mince en surface (3-1) et ladite couche d'accouplement mince et fusible (3-5) sont composées d'un même matériau, et lesdites couches de liage minces thermoréactives (3-2, 3-4) sont également composées d'un même matériau, de telle sorte que le film composite multicouches (3) comporte trois types de matériaux.

4. Méthode de fabrication d'un revêtement pour tuyaux (1) qui comprend les étapes consistant à:
produire un film composite multicouches de forme tubulaire (3) à structure à cinq couches comprenant une couche mince en surface (3-1) composée d'un polyéthylène ou polypropylène à point de fusion bas ou d'un copolymère de ces substances et dont l'épaisseur est comprise entre 10 µm et 100 µm; une couche de liage mince thermoréactive (3-2) composée d'une polyoléfine modifiée à point de fusion intermédiaire ou bas, qui est une résine de liage obtenue en introduisant un radical organoleptique dans une polyoléfine, l'EAA ou un ionomère et dont l'épaisseur est comprise entre 5 µm et 30 µm; une couche mince intermédiaire (3-3) composée d'un nylon, EVOH ou polyester à point de fusion élevé et d'une épaisseur comprise entre 5 µm et 50 µm; une couche de liage mince thermoréactive (3-4) composée d'une polyoléfine modifiée à point de fusion intermédiaire ou bas, qui est une résine de liage obtenue en introduisant un radical organoleptique dans une polyoléfine, l'EAA ou un ionomère et dont l'épaisseur est comprise entre 5 µm et 30 µm; et une couche d'accouplement mince et fusible (3-5) composée d'un polyéthylène ou polypropylène à point de fusion bas ou d'un copolymère de ces substances et dont l'épaisseur est comprise entre 10 µm et 100 µm;
insérer un matériau résine absorbant de forme tubulaire (2) dans ledit film composite multicouches de forme tubulaire (3);
évacuer ledit matériau résine absorbant de façon à ce que le film composite multicouches soit en contact étroit avec la surface extérieure dudit matériau résine absorbant;
faire chauffer ledit film composite multicouches tout en maintenant ledit état de contact étroit pour souder ledit film composite multicouches audit matériau résine absorbant; et
imprégner une résine durcissable dans ledit matériau résine absorbant.

5. Méthode selon la revendication 4, **caractérisée en ce qu'**elle comporte également les étapes consistant à:
insérer un tube de pression hautement étanche à l'air (4) dans ledit matériau résine absorbant (2);
gonfler ledit tube de pression au moyen d'une pression fluidique pour étirer ledit matériau résine absorbant et ledit film composite multicouches (3) vers l'extérieur en une forme tubulaire circulaire; et
évacuer ledit matériau résine absorbant pour amener ledit film composite multicouches en contact étroit avec la surface extérieure dudit matériau résine absorbant.

6. Méthode selon la revendication 4 ou la revendication 5, **caractérisée en ce que** ladite étape de chauffage dudit film composite multicouches (3) comprend l'étape qui consiste à déplacer un dispositif de chauffe (10) par rapport audit film composite multicouches (3) de façon à souder progressivement ledit film composite multicouches audit matériau résine absorbant (2) d'une extrémité à l'autre en direction de la longueur de celui-ci.

7. Méthode selon l'une quelconque des revendications 4 à 6, **caractérisée en ce que** ledit film composite multicouches (3) est moulé en une structure tubulaire sans soudure par une méthode de co-extrusion et soufflage.

8. Méthode selon l'une quelconque des revendications 4 à 7, **caractérisée en ce que** ladite couche mince en surface (3-1) et ladite couche d'accouplement mince et fusible (3-5) sont composées d'un même matériau, et lesdites couches de liage minces thermoréactives (3-2, 3-4) sont également composées d'un même matériau, de telle sorte que le film composite multicouches (3) comporte trois types de matériaux.
